# EUROPEAN PATENT SPECIFICATION

(11) **EP 2 660 205 B1**
(45) Date of publication and mention of the grant of the patent: **18.11.2015**
(21) Application number: 13154874.5
(22) Date of filing: 12.02.2013
(51) Int. Cl.: C02F 1/32

(54) **UV WATER TREATMENT ASSEMBLY COMPRISING AN IMPROVED CLAMP RING**
UV WASSERBEHANDLUNGSEINRICHTUNG MIT VERBESSERTEM KLEMMRING
DISPOSITIF DE TRAITEMENT D'EAU PAR RAYONNEMENT UV AVEC BAGUE DE SERRAGE AMÉLIORÉE

(30) Priority: 04.05.2012 US 201213464937
(43) Date of publication of application: 06.11.2013
(73) Proprietor: ATG R&D Limited, Wigan WN5 8AA (GB)
(72) Inventor: Orritt, Chris, Wigan, WN5 8AA (GB); Joshi, Richard, Wigan, WN5 8AA (GB)
(74) Representative: Dennemeyer & Associates S.A.

(56) References cited:
- WO-A1-99/36932
- DE-A1-102005 010 070
- FR-A1- 2 879 589
- US-A1- 2007 241 288

## Description

### BACKGROUND AND SUMMARY

The present invention relates generally to UV water treatment systems and specifically to such systems that use UV lamps disposed within quartz sleeves, the assemblies being mounted in reactors.

In the document US 2007/241288 A1, there is described a UV water treatment assembly according to the preamble of claim 1. This document is directed to an ultraviolet lamp assembly for water sterilization comprising:
- an UV illuminating unit 1 with a mounting board 11;
- a water treatment column 6 detachably engaged on a base 2,
   the base 2 sleeving the illuminating unit 1 and engaged the mounting board 11;
- a collar 4 mounted on the base 2;
- a quartz outer tube 5 tightly abutting the collar 4 and the base 2 to enclose the illuminating unit 1 with the mounting board 11, the base 2 and the collar 4; and
- an O-ring 3 compressively clamped between the base 2 and collar 4 to provide water-tightness efficiency.

The invention is characterized by the features claimed in the characterizing part of claim 1.

The UV water treatment system of the present invention comprises clamp ring 1, wedge shaped seal face 2, seal 3, quartz sleeve 4, clamp ring mounting recess 5, reactor 6, lamp 9, and reactor cavity 10.

According to the present invention, the clamp ring 1 has a wedge shaped seal face 2 which is disposed at an angle of 28.4 degrees, the clamp ring mounting recess 5 is formed in the reactor 6 ,and the seal 3 has a bulbous cross section, wherein the clamp ring 1 is removably attached to the reactor 6 approximate the clamp ring mounting recess 5 such that the wedge shaped seal face 2 compresses the bulbous seal 3 against the quartz sleeve 4.

One novel aspect of the present invention it is the wedge shaped seal face which ensures the seal is spread across the quartz sleeve and that the seal is only deformed not crushed, thus reducing the stress on the quartz sleeve (aka quartz glass). Using a bulbous, or exaggerated, seal (aka o-ring) allows a greater degree of deformity in the seal as it is compressed by the clamp ring. The shape of the wedge also gives the advantage that as the internal pressure within the reactor increases, the seal actually tightens further onto the quartz.

Other benefits, objects, and advantages are: improved vibration resistance (the larger seal face and better clearances allow the quartz to better cope with high vibration environments), improved maintenance (easy installation - the clamp ring can be bottomed out without any risk of over compressing the seal), the wedge shape allows a larger clearance hole (in clamp ring mounting recess 5) which tolerates possible misalignment of the clamp ring (aka flange), easy extraction (the larger seal, and clearances around it, allow for easier seal removal), design of the seal face ensures optimum sealing with minimal stress on the quartz (as the internal pressure increases, the seal automatically tightens onto the quartz ensuring best possible balance between sealing and pressure on the quartz), and the invention provides a guaranteed seal in case of quartz failure (in the event of a quartz failure, the seal ensures a watertight seal).

### BRIEF DESCRIPTION OF THE DRAWINGS

FIG. 1 depicts a side cutaway view showing the compressed seal in the in the wedge shaped seal face.

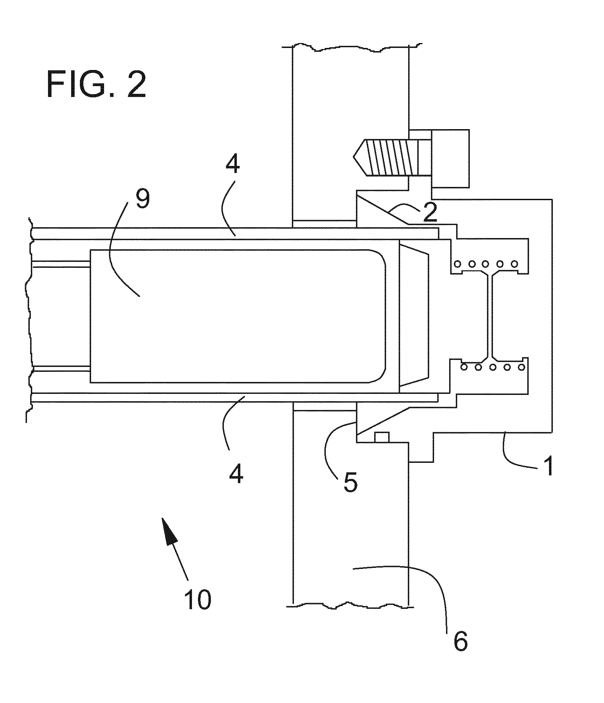

FIG. 2 depicts a side cutaway view of the wedge shaped seal face.
FIG. 3A depicts a side cutaway view of the wedge shaped seal face disposed in rear clamp ring (aka clamp ring, generally).
FIG. 3B depicts a perspective view of the wedge shaped seal face disposed in rear clamp ring.
FIG. 3C depicts a perspective rear view of the rear clamp ring.

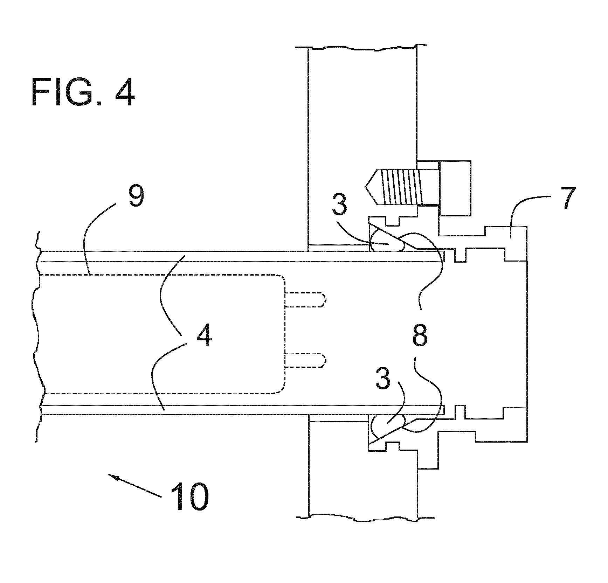

FIG. 4 depicts a side cutaway view of the wedge shaped seal face mounted to the reactor with quartz sleeve and lamp.
FIG. 5A depicts a side cutaway view (along line depicted in FIG. 5E) of the wedge shaped seal face disposed in screwed clamp ring (aka clamp ring, generally).
FIG. 5B depicts a perspective view of the wedge shaped seal face disposed in screwed clamp ring.
FIG. 5C depicts a perspective rear view of the screwed clamp ring.
FIG. 5D depicts a partial view taken from FIG. 5A as indicated therein.
FIG. 5E depicts a rear view of the screwed clamp ring.

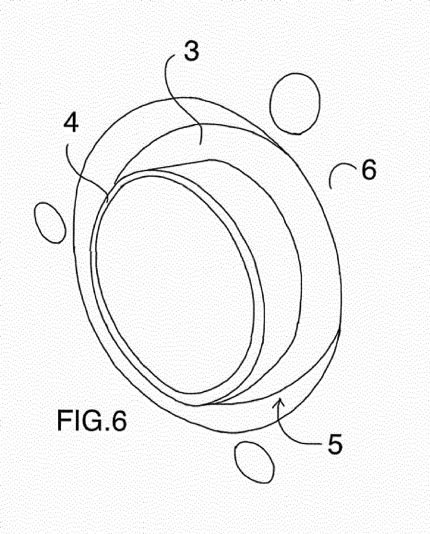

FIG. 6 depicts a perspective view of a seal around a quartz sleeve in a mounting recess.

### DETAILED DESCRIPTION

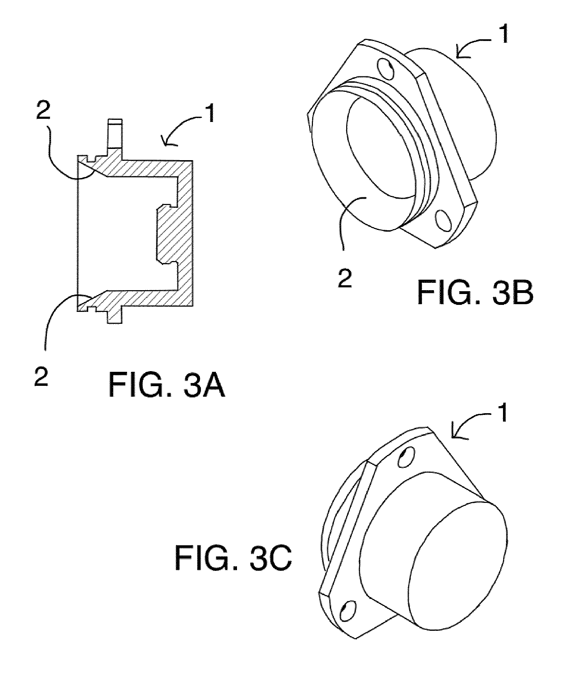

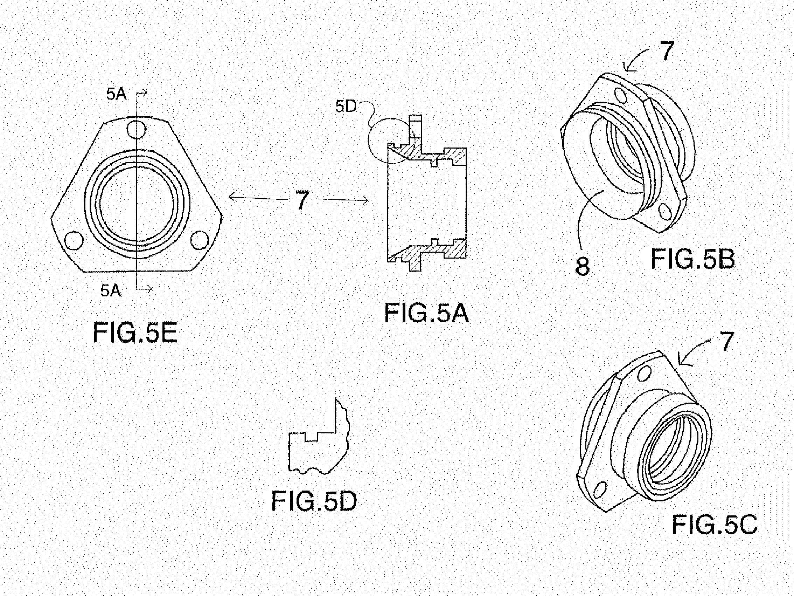

An improved clamp ring comprises clamp ring 1 having wedge shaped seal face 2. As depicted, clamp ring 1 (aka "rear clamp ring"), and screw clamp ring 7 each have a wedge shaped seal face (2 & 8 respectively) having essentially the same functionality in the various embodiments discussed regardless of use in screwed clamp ring or rear clamp ring. According to the invention (FIGS. 3A, 5A) wedge shaped seal face 2, 8 is disposed at an angle of 28.4 degrees.

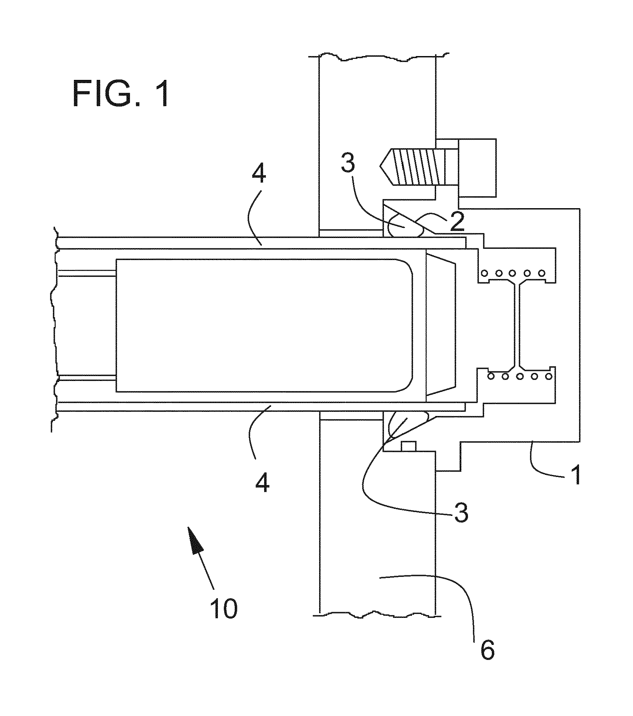

As shown (FIG. 1) an improved clamp ring system comprises, clamp ring 1 having wedge shaped seal face 2, reactor 6 having clamp ring mounting recess 5, quartz sleeve 4 disposed within clamp ring mounting recess 5, and seal 3 being disposed within clamp ring mounting recess 5 around quartz sleeve 4.

Clamp ring 1 is removably attached to reactor 6 approximate clamp ring mounting recess 5, such that wedge shaped seal face 2 compresses seal 3 against quartz sleeve 4. Seal 3 has a bulbous cross section relative to conventional seals.

Clamp rings 1 & 7, and reactor 6 are preferably made of stainless steel, but other materials can be used to accommodate the various needs (e.g. UV water treatment reactor). Seal 3 can be made of rubber or other materials suitable for providing watertight seals. Quartz sleeve 4 serves as a housing for UV lamp 9 placed therein.

## Claims

1. A UV water treatment assembly using a UV lamp (9) disposed within a quartz sleeve (4), the assembly being mounted in a mounting reactor (6) and having a clamp ring system comprising:
a clamp ring (1);
a quartz sleeve (4) disposed within a clamp ring mounting recess (5);
a seal (3) being disposed within the clamp ring mounting recess (5) around the quartz sleeve (4),
**characterized in that**
the clamp ring (1) has a wedge shaped seal face (2),
the clamp ring mounting recess (5) is formed in the reactor (6) ,and the seal (3) has a bulbous cross section,
wherein the wedge shaped seal face (2) is disposed at an angle of 28.4 degrees , and the clamp ring (1) is removably attached to the reactor (6) approximate the clamp ring mounting recess (5) such that the wedge shaped seal face (2) compresses the bulbous seal (3) against the quartz sleeve (4).

## Patentansprüche

1. UV-Wasseraufbereitungsanordnung, die eine UV-Leuchte (9) einsetzt, ist innerhalb einer Quarzmanschette (4) angeordnet, wobei die Anordnung in einem Befestigungsreaktor (6) befestigt ist und ein Klemmringsystem aufweist, umfassend:
einen Klemmring (1);
eine Quarzmanschette (4), die innerhalb einer Befestigungsaussparung (5) des Klemmrings angeordnet ist;
eine Dichtung (3), die in der Befestigungsaussparung (5) des Klemmrings um die Quarzmanschette (4) herum angeordnet ist;
**dadurch gekennzeichnet, dass**
der Klemmring (1) eine keilförmige Dichtfläche (2) aufweist,
die Befestigungsaussparung (5) des Klemmrings im Reaktor (6) gebildet ist, und
die Dichtung (3) einen knolligen Querschnitt aufweist,
wobei die keilförmige Dichtfläche (2) in einem Winkel von 28,4 Grad angeordnet ist und
der Klemmring (1) abnehmbar am Reaktor (6) in der Nähe der Befestigungsaussparung (5) des Klemmrings derart befestigt ist, dass die keilförmige Dichtfläche (2) die knollige Dichtung (3) gegen die Quarzmanschette (4) zusammendrückt.

## Revendications

1. Dispositif de traitement d'eau par rayonnement UV utilisant une lampe UV (9) disposée à l'intérieur d'un manchon en quartz (4), le dispositif étant monté dans un réacteur de montage (6) et ayant un système de bague de serrage comprenant:
une bague de serrage (1) ;
un manchon en quartz (4) disposé à l'intérieur d'un évidement de montage de bague de serrage (5) ;
un joint d'étanchéité (3) étant disposé à l'intérieur de l'évidement de montage de bague de serrage (5) autour du manchon en quartz (4),
**caractérisé en ce que** :
la bague de serrage (1) a une face de joint d'étanchéité en forme de cale (2),
l'évidement de montage de bague de serrage (5) est formé dans le réacteur (6), et
le joint d'étanchéité (3) a une section transversale bulbeuse,
dans lequel la face de joint d'étanchéité en forme de cale (2) est disposée à un angle de 28,4 degrés, et la bague de serrage (1) est fixée de manière amovible au réacteur (6) à proximité de l'évidement de montage de bague de serrage (5) de sorte que la face de joint d'étanchéité en forme de cale (2) comprime le joint d'étanchéité bulbeux (3) contre le manchon en quartz (4).
